# EUROPÄISCHE PATENTSCHRIFT

(11) **EP 2 954 276 B1**
(45) Veröffentlichungstag und Bekanntmachung des Hinweises auf die Patenterteilung: **24.05.2017**
(21) Anmeldenummer: 14703327.8
(22) Anmeldetag: 05.02.2014
(51) Int. Cl.: F28D 1/00, F02B 29/04, F28F 9/00, F28D 21/00

(54) **FRISCHLUFTANLAGE**
INTAKE AIR ASSEMBLY
CONDITIONNEMENT D'AIR FRAIS

(30) Priorität: 08.02.2013 DE 102013202118
(43) Veröffentlichungstag der Anmeldung: 16.12.2015
(73) Patentinhaber: Mahle International GmbH, 70376 Stuttgart (DE)
(72) Erfinder: BRAND, Winfried, 70378 Stuttgart (DE); MORGILLO, Ivano, 71543 Neuhütten (DE)
(74) Vertreter: BRP Renaud & Partner mbB Rechtsanwälte Patentanwälte Steuerberater
(86) Internationale Anmeldenummer: PCT/EP2014/052197
(87) Internationale Veröffentlichungsnummer: WO 2014/122148

(56) Entgegenhaltungen:
- WO-A1-2011/023516
- WO-A1-2012/159730
- NL-A- 7 802 291
- US-A- 5 632 328
- US-A1- 2002 003 034

## Beschreibung

Die vorliegende Erfindung betrifft eine Frischluftanlage zur Versorgung von Brennräumen einer aufgeladenen Brennkraftmaschine mit Frischluft.

Bei einer aufgeladenen Brennkraftmaschine wird im Betrieb die Frischluft mittels einer entsprechenden Ladeeinrichtung auf ein erhöhtes Druckniveau gebracht. Die hierzu erforderliche Kompression bzw. Verdichtung der Frischluft führt gleichzeitig zu einer Erwärmung der Frischluft. Um den Massestrom an Frischluft zu den Brennräumen der Brennkraftmaschine zu erhöhen, wird die aufgeladene Frischluft, die auch als Ladeluft bezeichnet wird, gekühlt. Hierzu weist die Frischluftanlage einen Ladeluftkühler auf. Der Ladeluftkühler ist dabei in ein Gehäuse der Frischluftanlage eingesetzt, derart, dass ein durch das Gehäuse hindurchgeführter Frischluftpfad auch durch den Ladeluftkühler hindurchführt. Zur Vermeidung einer Leckageströmung, die den Ladeluftkühler luftseitig zwischen einer dem Gehäuse zugewandten Außenseite des Ladeluftkühlers und einer dem Ladeluftkühler zugewandten Innenseite des Gehäuses umgeht, kann eine Bypassdichtung vorgesehen sein, die sich quer zum Frischluftpfad erstreckt und somit quer zur Strömungsrichtung der Frischluft verläuft.

Zweckmäßig ist das Gehäuse der Frischluftanlage aus einem Kunststoff hergestellt. Im Unterschied dazu ist der Ladeluftkühler üblicherweise aus Metall hergestellt. Hierdurch ergeben sich unterschiedliche thermische Ausdehnungskoeffizienten. Stark variierende Temperaturen können somit im Betrieb zu Relativbewegungen zwischen dem Ladeluftkühler und dem Gehäuse führen. Des Weiteren besitzt das Gehäuse eine gewisse Elastizität, so dass sich das Gehäuse abhängig von dem darin herrschenden Luftdruck, also abhängig vom aktuellen Ladedruck, elastisch verformen, also mehr oder weniger aufweiten bzw. aufblasen kann. Dabei ist bemerkenswert, dass moderne Ladeeinrichtungen, wie z.B. ein Abgasturbolader mit variabler Turbinengeometrie, bedarfsabhängig unterschiedliche Ladedrücke erzeugen können. Dementsprechend kann auch der jeweilige Ladedruck für Relativbewegungen zwischen dem Ladeluftkühler und dem Gehäuse führen. Derartige Relativbewegungen zwischen Ladeluftkühler und Gehäuse, die im Wesentlichen quer zum Frischluftpfad orientiert sind, können die Effizienz der Bypassdichtung reduzieren. Außerdem besteht grundsätzlich die Gefahr einer Beschädigung der Bypassdichtung.

WO 2011/023516 A1 offenbart eine Frischluftanlage mit einem Gehäuse, durch das ein Frischluftpfad hindurchgeführt ist, wobei das Gehäuse eine quer zum Frischluftpfad verlaufende, zum Frischluftpfad offene Führungsnut aufweist.

Die vorliegende Erfindung beschäftigt sich mit dem Problem, für eine Frischluftanlage der eingangs genannten Art eine verbesserte Ausführungsform anzugeben, die sich insbesondere dadurch auszeichnet, dass die jeweilige Bypassdichtung eine erhöhte Effizienz und/oder eine erhöhte Haltbarkeit besitzt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Bypassdichtung als Nut-Feder-System zu konfigurieren, wobei die "Feder" an einem separaten Dichtungsträger ausgebildet ist, der zumindest einen mit dem Ladeluftkühler zusammenwirkenden Dichtkörper trägt. Die "Nut" des Nut-Feder-Systems ist dabei an einer dem Ladeluftkühler zugewandten Innenseite des Gehäuses ausgebildet. Der Dichtungsträger besitzt einen die "Feder" bildenden Führungssteg, der in einer Steckrichtung in die gehäuseseitige Nut, die im Folgenden als Führungsnut bezeichnet wird, eingesteckt ist. Diese Steckrichtung erstreckt sich dabei quer zum Frischluftpfad und quer zur Längserstreckungsrichtung der Führungsnut. Der Eingriff des Führungsstegs in die Führungsnut erfolgt dabei lose und mit Spiel in der Steckrichtung, so dass der Führungssteg in der Führungsnut in der Steckrichtung verstellbar ist. Auf diese Weise ist der Dichtungsträger in der Steckrichtung relativ zum Gehäuse schwimmend gelagert, so dass er parallel zur Steckrichtung relativ zum Gehäuse verstellbar ist. Dabei ist der Dichtungsträger durch den in der Längsrichtung oder Strömungsrichtung des Frischluftpfads wirkenden Formschluss zwischen dem Führungssteg und der Führungsnut parallel zum Frischluftpfad hinreichend positioniert bzw. fixiert. Durch die hier vorgestellte Maßnahme ist die jeweilige Bypassdichtung tolerant gegenüber Relativbewegungen zwischen Ladeluftkühler und Gehäuse, die parallel zur Steckrichtung orientiert sind, also quer zum Frischluftpfad orientiert sind. Somit kann die hier vorgestellte Bypassdichtung insbesondere die zuvor genannten thermischen Dehnungseffekte sowie die vom Ladedruck abhängigen Dehnungseffekte kompensieren. Auf diese Weise wird die Effizienz der Bypassdichtung verbessert, wobei gleichzeitig die Lebensdauer der Bypassdichtung verlängert wird.

Entsprechend einer vorteilhaften Ausführungsform kann der Dichtungsträger mittels Federkraft in der Steckrichtung gegen den Ladeluftkühler vorgespannt sein. Auf diese Weise wird beispielsweise mittels geeigneter Federmittel gewährleistet, dass der Dichtungsträger mit dem wenigstens einen Dichtungskörper stets in Kontakt mit dem Ladeluftkühler bleibt, selbst wenn sich die Relativlage zwischen Gehäuse und Ladeluftkühler verändert.

Bei einer anderen Ausführungsform können Federmittel zum Vorspannen des Dichtungsträgers in der Steckrichtung gegen den Ladeluftkühler integral am Dichtungsträger ausgeformt sein. Durch die integrale Bauweise lässt sich die Federkraft zum Vorspannen des Dichtungsträgers besonders preiswert realisieren. Insbesondere vereinfacht sich die Montage der Bypassdichtung, da keine separaten Federmittel montiert werden müssen.

Bei einer anderen vorteilhaften Ausführungsform kann der Dichtungsträger zwei Tragstege aufweisen, die an einem von der Führungsnut abgewandten Ende des Führungsstegs so angeordnet sind, dass sie in entgegengesetzten Richtungen quer vom Führungssteg abstehen. Besonders zweckmäßig ist nun eine Weiterbildung, bei welcher jeder Tragsteg wenigstens einen Dichtkörper aufweist, der am Ladeluftkühler anliegt. Diese Bauweise führt parallel zum Frischluftpfad zu einer vergleichsweise breiten Abstützung des Dichtungsträgers am Ladeluftkühler über wenigstens zwei Dichtkörper, wodurch die Bypassdichtung eine erhöhte Stabilität aufweist. Gleichzeitig führen die wenigstens zwei Dichtkörper zu einer signifikanten Verbesserung der Dichtungswirkung.

Gemäß einer anderen vorteilhaften Weiterbildung kann an den Tragstegen jeweils wenigstens eine Federlasche angeordnet oder integral daran ausgeformt sein, die sich in der Steckrichtung jeweils an einem die Führungsnut seitlich begrenzenden Nutrand abstützt. Mit Hilfe dieser Federlaschen kann die zuvor bereits genannte Federkraft zum Vorspannen des Dichtungsträgers in der Steckrichtung gegen den Ladeluftkühler erzeugt werden. Insbesondere bilden die Federlaschen somit die vorstehend bereits genannten Federmittel. Auf diese Weise wird in die Tragstege eine Zusatzfunktion integriert, was insgesamt die Herstellung der Bypassdichtung vereinfacht.

Bei einer besonders vorteilhaften Weiterbildung können die Federlaschen vom jeweiligen Tragsteg ausgestellt sein. Beispielsweise kann eine Federlasche, die eine im Wesentlichen rechteckige Außenkontur besitzt, dadurch hergestellt werden, dass in einem ebenen Bereich des Tragstegs drei Seiten eines rechteckigen Bereichs freigeschnitten werden, wodurch eine ebene Lasche entsteht, die an ihrer vierten Seite fest mit dem übrigen Tragsteg verbunden ist. Durch gezielte Umformung wird aus der ebenen Lasche die jeweilige Federlasche hergestellt, wobei die Federlasche zumindest teilweise aus der Ebene des Tragstegs herausgestellt wird.

Bei einer anderen vorteilhaften Ausführungsform kann jeder Tragsteg an seinem vom Führungssteg entfernten Ende einen in Richtung Ladeluftkühler abgewinkelten Kragen oder Bord aufweisen, auf den der jeweilige Dichtkörper aufgesteckt ist. Hierdurch erhält der Dichtungsträger eine besonders hohe Steifigkeit.

Bei einer alternativen Ausführungsform kann der jeweilige Tragsteg wenigstens einen Durchbruch aufweisen, der von dem jeweiligen angespritzten Dichtkörper durchsetzt ist. Mit anderen Worten, der jeweilige Dichtkörper wird an den Tragsteg im Bereich eines derartigen Durchbruchs angespritzt, derart, dass der Dichtkörper anschließend den jeweiligen Durchbruch durchsetzt, wodurch sich ein intensiver formschlüssiger Verbund ausbilden kann.

Gemäß einer anderen vorteilhaften Ausführungsform kann der Führungssteg innerhalb der Führungsnut auf voneinander abgewandten Seiten je einen Dichtkörper aufweisen, wobei die beiden Dichtkörper an sich gegenüberliegenden Nutwänden anliegen. Durch diese Maßnahme wird zwischen dem Dichtkörper und dem Gehäuse eine intensive Abdichtung realisiert, die tolerant ist gegenüber Relativbewegungen zwischen Dichtungsträger und Gehäuse in der Steckrichtung.

Entsprechend einer besonderen Ausführungsform kann die Führungsnut einen dem Ladeluftkühler zugewandten Dichtungsabschnitt und einen über eine Querschnittsverengung daran angrenzenden, vom Ladeluftkühler abgewandten Führungsabschnitt aufweisen. Im Dichtungsabschnitt wirken Dichtkörper mit einander zugewandten Nutwänden zusammen, wobei diese Dichtkörper am Führungssteg angeordnet sind. Mit dem Führungsabschnitt steht dagegen ein vom Ladeluftkühler abgewandter Endabschnitt des Führungsstegs in der Steckrichtung in Eingriff.

Dabei sind sowohl die Dichtkörper im Dichtungsabschnitt als auch der Endabschnitt im Führungsabschnitt lose und in der Steckrichtung mit Spiel angeordnet, so dass der Führungssteg in der Führungsnut und somit der Dichtungsträger relativ zum Gehäuse in der Steckrichtung verstellbar ist. Der gestufte Querschnitt der Führungsnut führt zu einer verbesserten Führungswirkung und zu einer verbesserten Querstabilität der Bypassdichtung.

Gemäß einer vorteilhaften Weiterbildung kann der Führungssteg wenigstens einen Durchbruch aufweisen, der von dem jeweiligen angespritzten Dichtkörper durchsetzt ist. Mit anderen Worten, der jeweilige Dichtkörper wird im Bereich des jeweiligen Durchbruchs an den Führungssteg angespritzt, derart, dass der Dichtkörper anschließend den jeweiligen Durchbruch durchsetzt. Hierdurch wird eine intensive Anbindung zwischen Führungssteg und Dichtkörper erreicht.

Gemäß einer anderen vorteilhaften Ausführungsform kann der Dichtungsträger ein aus einem einzigen Blechteil hergestellter Blechformkörper sein. Hierdurch lässt sich der Dichtungsträger einerseits preiswert und andererseits mit einer hohen Steifigkeit realisieren. Alternativ ist es grundsätzlich möglich, den Dichtungsträger auch als Kunststoffspritzformkörper zu konfigurieren.

Bei einer anderen Ausführungsform kann das Gehäuse eine Führungskonsole aufweisen, in der die Führungsnut ausgebildet ist. Diese Führungskonsole ist dabei entweder an eine dem Ladeluftkühler zugewandte Innenseite des Gehäuses angebaut oder aber an dieser Innenseite integral ausgeformt. In jedem Fall kann mit Hilfe einer derartigen Führungskonsole im Gehäuse lokal, nämlich begrenzt auf den Bereich der Bypassdichtung, eine erhöhte Wandstärke für das Gehäuse realisiert werden, die zur Unterbringung der Führungsnut erforderlich ist. Da das Gehäuse im Übrigen, also außerhalb der Bypassdichtung seine übliche geringe Wandstärke beibehalten kann, lässt es sich nach wie vor leicht und preiswert herstellen. Das Anbringen bzw. das Vorsehen einer derartigen Führungskonsole vereinfacht somit die Herstellung der jeweiligen Bypassdichtung.

Bei einer anderen Ausführungsform kann das Gehäuse eine Montageöffnung aufweisen, durch die der Ladeluftkühler in einer quer zum Frischluftpfad verlaufenden Einführrichtung in das Gehäuse eingeführt ist, wobei sich die Führungsnut in diese Einführrichtung erstreckt. Durch das für die Bypassdichtung vorgesehene Nut-Feder-System, das in der Einführrichtung des Ladeluftkühlers orientiert ist, kann die Bypassdichtung gleichzeitig beim Einführen des Ladeluftkühlers als Führungshilfe dienen. Insbesondere lässt sich der Dichtungsträger ebenfalls in der Einführrichtung in das Gehäuse einführen, wobei der in die Führungsnut eingreifende Führungssteg als Längsführung dient.

Bei einer anderen vorteilhaften Ausführungsform kann der Ladeluftkühler an zwei voneinander abgewandten Seiten jeweils wenigstens eine Bypassdichtung aufweisen. Somit kann sich das Gehäuse an zwei voneinander abgewandten Seiten des Ladeluftkühlers relativ zum Ladeluftkühler bewegen, ohne dass dadurch die Dichtungswirkung der Bypassdichtung beeinträchtigt wird. Alternativ ist grundsätzlich auch eine Ausführungsform denkbar, bei welcher nur an einer Seite eine derartige bewegliche Bypassdichtung vorgesehen ist, die eine Art "Loslager" bildet, während an der anderen Seite eine starre Dichtung realisiert wird, die eine Art "Festlager" bildet. In diesem Fall erfolgt im Bereich der starren Dichtung außerdem eine feste Verbindung zwischen dem Ladeluftkühler und dem Gehäuse. Hierdurch ist gewährleistet, dass die Relativbewegungen zwischen Gehäuse und Ladeluftkühler nur an derjenigen Seite auftreten, an der auch die bewegliche Bypassdichtung vorgesehen ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Schnittansicht einer Frischluftanlage im Bereich einer Bypassdichtung zwischen einem Gehäuse und einem Ladeluftkühler,
- Fig. 2: eine isometrische Ansicht wie in Fig. 1, jedoch bei weggelassenem Ladeluftkühler,
- Fig. 3: eine isometrische Ansicht eines Dichtungsträgers,
- Fig. 4: eine Ansicht wie in Fig. 3, jedoch bei einer anderen Blickrichtung,
- Fig. 5: eine Ansicht wie in Fig. 1, jedoch bei einer anderen Ausführungsform der Bypassdichtung bzw. des Dichtungsträgers,
- Fig. 6: eine Ansicht wie in Fig. 2, jedoch bei der Ausführungsform der Fig. 5,
- Fig. 7: eine isometrische Ansicht des Dichtungsträgers der Ausführungsform der Figuren 5 und 6,
- Fig. 8: eine isometrische Ansicht wie in Fig. 7, jedoch bei einer anderen Blickrichtung.

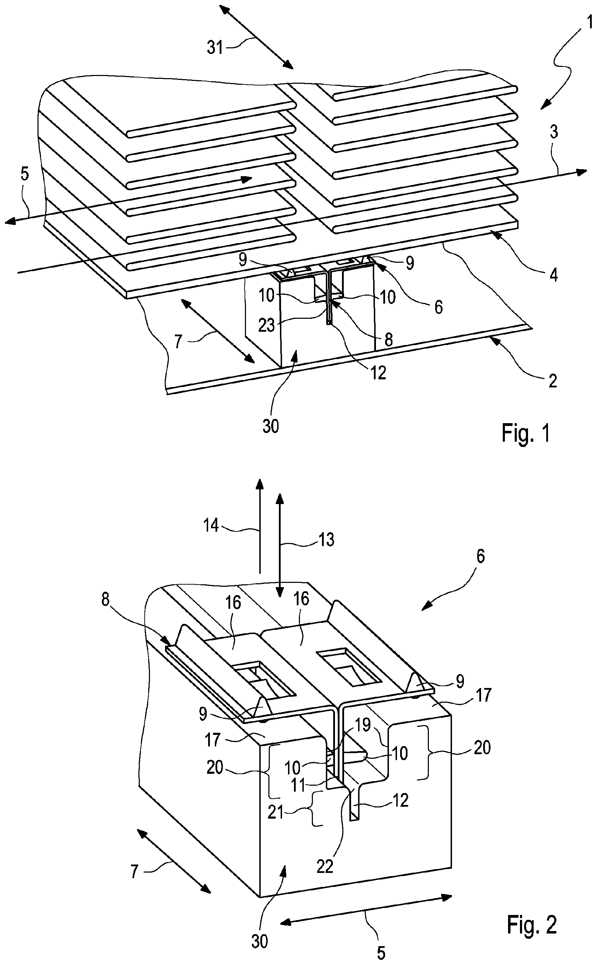

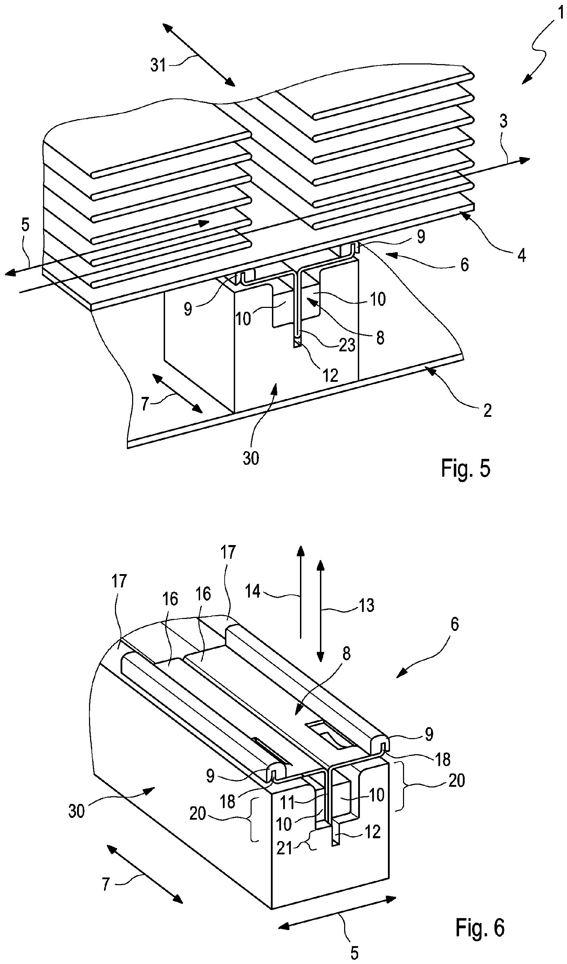

Entsprechend den Figuren 1 und 5 besitzt eine Frischluftanlage 1, die zur Versorgung mit Frischluft von Brennräumen einer aufgeladenen Brennkraftmaschine, vorzugsweise in einem Kraftfahrzeug dient, ein Gehäuse 2, durch das ein Frischluftpfad 3 hindurchgeführt ist. Im Gehäuse 2 ist ein Ladeluftkühler 4 so angeordnet, dass der Frischluftpfad 3 auch durch den Ladeluftkühler 4 hindurchführt. Im Betrieb der Frischluftanlage 1 strömt Frischluft bzw. Ladeluft entlang des Frischluftpfads 3 in einer Längsrichtung des Frischluftpfads 3, die sich parallel zum Frischluftpfad 3 erstreckt. Diese Längsrichtung 5 oder Strömungsrichtung 5 ist dabei durch einen Doppelpfeil angedeutet.

Zwischen dem Gehäuse 2 und dem Ladeluftkühler 4 ist zumindest an einer Seite des Ladeluftkühlers 4 eine Bypassdichtung 6 angeordnet, die sich in einer Querrichtung 7 des Frischluftpfads 3 erstreckt. Die Bypassdichtung 6 verhindert eine luftseitige Umgehung bzw. Umströmung des Ladeluftkühlers 4. Abweichend zur Darstellung der Figuren 1 und 5 erstreckt sich die Bypassdichtung 6 dabei zweckmäßig über die gesamte in der Querrichtung 7 gemessene Breite des Ladeluftkühlers 4.

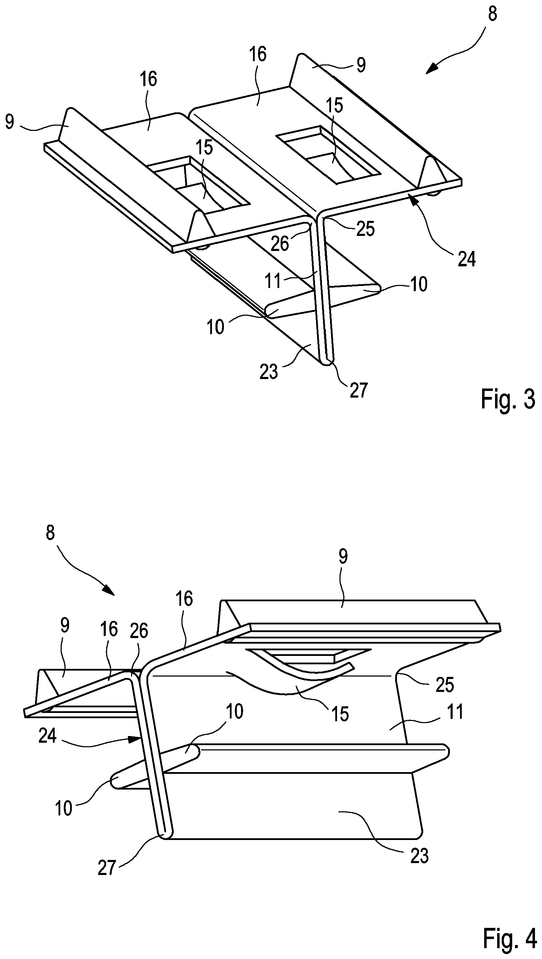

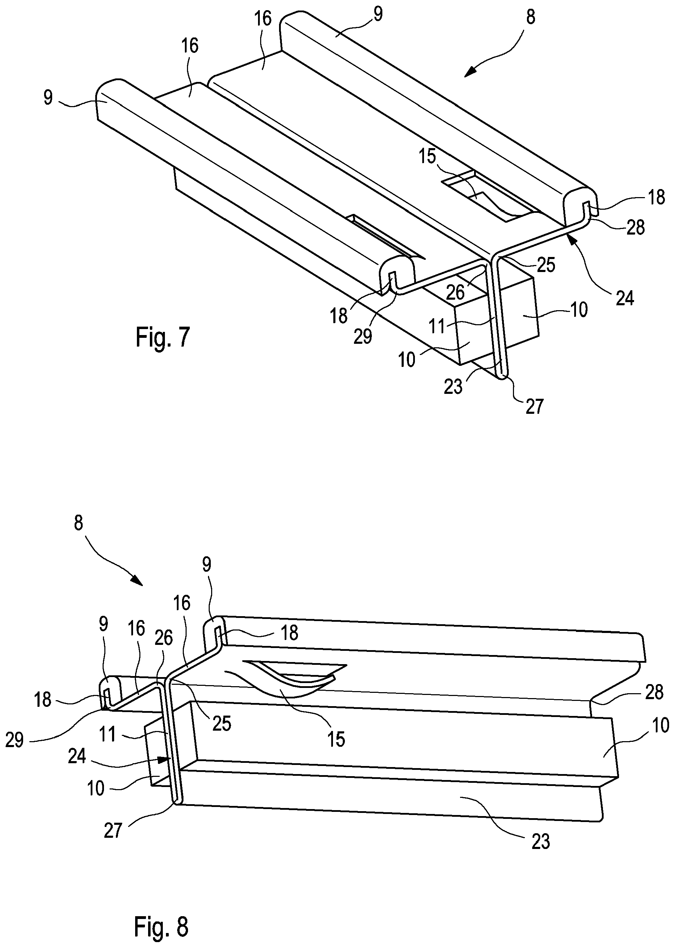

Entsprechend den Figuren 1 bis 8 weist die jeweilige Bypassdichtung 6 einen Dichtungsträger 8 auf, der zumindest einen Dichtkörper 9, 10 trägt. Bei den hier gezeigten Ausführungsformen sind jeweils vier Dichtkörper 9, 10 am Dichtungsträger 8 angeordnet. Der Dichtungsträger 8 weist außerdem einen Führungssteg 11 auf. Komplementär zum Führungssteg 11 besitzt das Gehäuse 2 eine Führungsnut 12, die sich in der Querrichtung 7 erstreckt und die zum Frischluftpfad 3 hin offen ist. Der Führungssteg 11 greift nun in die Führungsnut 12 in einer Steckrichtung 13 ein, die sich quer zur Längsrichtung 5 und quer zur Querrichtung 7 erstreckt. Der Führungssteg 11 erstreckt sich mit seinem Profil in dieser Steckrichtung 13. Ferner erstreckt sich der gesamte Dichtungsträger 8 mit seinem Führungssteg 11 in der Querrichtung 7. Abweichend zu den Darstellungen der Figuren 1, 2, 5 und 6 erstreckt sich der Dichtungsträger 8 zweckmäßig über die gesamte parallel zur Querrichtung 7 gemessene Breite des Ladeluftkühlers 4.

Der Eingriff des Führungsstegs 11 in die Führungsnut 12 erfolgt derart, dass der Führungssteg 11 in der Führungsnut 12 in der Steckrichtung 13 beweglich angeordnet ist. Insbesondere ist der Führungssteg 11 hierzu lose und in der Steckrichtung 13 mit Spiel in der Führungsnut 121 angeordnet.

Der Dichtungsträger 8 ist mittels Federkraft 14 in der Steckrichtung 13 gegen den Ladeluftkühler 4 vorgespannt. Diese Federkraft 14 kann mit geeigneten Federmitteln 15 erzeugt werden. Diese Federmittel 15 können dabei am Dichtungsträger 8 integral ausgeformt sein.

Der Dichtungsträger 8 weist an einer dem Ladeluftkühler 4 zugewandten Seite zwei Tragstege 16 auf, die in entgegengesetzten Richtungen quer vom Führungssteg 11, also in der Längsrichtung 5 abstehen. Dabei befinden sich die beiden Tragstege 16 zweckmäßig an einem von der Führungsnut 12 abgewandten Ende des Führungsstegs 11. Jeder der beiden Tragstege 16 trägt zumindest einen Dichtkörper 9, der am Ladeluftkühler 4 anliegt. An den Tragstegen 16 ist jeweils wenigstens eines der vorstehend genannten Federmittel 15 ausgebildet. Dabei kann das jeweilige Federmittel 15 zweckmäßig in Form einer Federlasche realisiert sein, die im Folgenden ebenfalls mit "15" bezeichnet wird. Die jeweilige Federlasche 15 stützt sich im montierten Zustand gemäß den Figuren 2 und 6 an einem Nutrand 17 ab, der die Führungsnut 12 seitlich begrenzt. Bei den hier gezeigten Ausführungsformen sind die Federlaschen 15 dadurch am jeweiligen Tragsteg 16 integral ausgeformt, dass ein entsprechender laschenförmiger Bereich freigeschnitten und durch Umformung ausgestellt wird.

Bei der in den Figuren 5 bis 8 gezeigten Ausführungsform besitzen die beiden Tragstege 16 am jeweiligen, vom Führungssteg 11 entfernten Ende jeweils einen in Richtung des Ladeluftkühlers 4 abgewinkelten Bord 18, auf den der zugehörige Dichtkörper 9 aufgesteckt ist. Bei dieser Ausführungsform werden somit die Dichtkörper 9 separat vom Dichtungsträger 8 hergestellt und anschließend daran angebaut.

Bei der in den Figuren 1 bis 4 gezeigten Ausführungsform werden zumindest die an den Tragstegen 16 vorgesehenen Dichtkörper 9 an den Dichtungsträger 8 bzw. an den jeweiligen Tragsteg 16 angespritzt. Zweckmäßig kann der jeweilige Tragsteg 16 im Bereich des zugehörigen Dichtkörpers 9 wenigstens einen Durchbruch (nicht dargestellt bzw. verdeckt) aufweisen, der vom angespritzten Dichtkörper 9 durchsetzt ist. Alternativ dazu kann der jeweilige Dichtkörper 9 auch an den zugehörigen Tragsteg 16 angeklebt oder angeschweißt oder anvulkanisiert sein.

Entsprechend den Figuren 1 bis 8 weist der Führungssteg 11 innerhalb der Führungsnut 12 an voneinander abgewandten Seiten jeweils einen der Dichtkörper 10 auf. Diese am Führungssteg 11 vorgesehenen Dichtkörper 10 kommen dabei an Nutwänden 19 zur Anlage, die sich in der Führungsnut 12 in der Längsrichtung 5 gegenüberliegen. Diese Nutwände 19 erstrecken sich dabei in der Querrichtung 7 und in der Einsteckrichtung 13, sowie parallel zueinander, so dass der dichtende Kontakt zwischen den Dichtkörpern 10 des Führungsstegs 11 und den Nutwänden 19 erhalten bleibt, wenn sich der Dichtungsträger 8 relativ zur Führungsnut 12 in der Einsteckrichtung 13 bewegt.

Bei den hier gezeigten, bevorzugten Ausführungsformen besitzt die Führungsnut 12 einen zweistufigen Querschnitt. Ein dem Ladeluftkühler 4 zugewandter Dichtungsabschnitt 20 besitzt dabei eine parallel zur Längsrichtung 5 gemessene Nutbreite, die größer ist als in einem daran angrenzenden, vom Ladeluftkühler 4 abgewandten Führungsabschnitt 21 der Längsnut. Dabei geht der Dichtungsabschnitt 20 über eine Querschnittsverengung 22 in den Führungsabschnitt 21 über. Diese Querschnittsverengung 22 wird hierbei dadurch realisiert, dass die beiden, einander in der Führungsnut 12 gegenüberliegenden Nutwände 19 im Bereich der Querschnittsverengung 22 jeweils eine, insbesondere rechtwinklige, Stufe aufweisen. Die Dichtkörper 10 des Führungsstegs 11 wirken innerhalb des Dichtungsabschnitts 20 mit den Nutwänden 19 zusammen. Ein vom Ladeluftkühler 4 abgewandter Endabschnitt 23 des Führungsstegs 11 greift dabei in der Steckrichtung 13 in den Führungsabschnitt 21 der Führungsnut 12 ein.

Um am Führungssteg 11 die zugehörigen Dichtkörper 10 anbringen zu können, ist es ebenfalls möglich, am Führungssteg 11 wenigstens einen Durchbruch (nicht gezeigt bzw. verdeckt) vorzusehen, der beim Anspritzen der Dichtkörper 10 vom Dichtungswerkstoff durchsetzt wird. Insbesondere können die beiden Dichtkörper 10 durch den jeweiligen Durchbruch hindurch, also durch den Führungssteg 11 hindurch, fest miteinander verbunden bzw. einteilig ausgeführt sein. Alternativ ist es auch hier möglich, diese Dichtkörper 10 separat vom Dichtungsträger 8 herzustellen und dann anschließend am Führungssteg 11 auf geeignete Weise zu befestigen, beispielsweise durch Ankleben, Anschweißen oder Anvulkanisieren.

Bei den hier gezeigten Ausführungsformen ist der Dichtungsträger 8 ein Blechformkörper, der aus einem einzigen Blechteil 24 hergestellt ist. Beispielsweise ist bei der in den Figuren 1 bis 4 gezeigten Ausführungsform das Blechteil 24 zum Ausformen der Tragstege 16 an Übergängen 25, 26 zum Führungssteg 11 jeweils um 90° abgewinkelt, während es an einer Stirnseite 27 des von den Tragarmen 16 abgewandten Endabschnitts 23 des Führungsstegs 11 um 180° umgebogen ist. Bei der in den Figuren 5 bis 8 gezeigten Ausführungsform ist das Blechteil 24 außerdem an Übergängen 28, 29 zwischen dem jeweiligen Tragsteg 16 und dem zugehörigen Bord 18 jeweils um 90° abgewinkelt.

Wie sich den Figuren 1, 2, 5 und 6 entnehmen lässt, kann das Gehäuse 2 im Bereich der jeweiligen Bypassdichtung 6 eine Führungskonsole 30 aufweisen, in der die Führungsnut 12 ausgebildet ist. Die Führungskonsole 30 kann auf geeignete Weise an das Gehäuse 2 angebaut sein. Bevorzugt ist jedoch eine Ausführungsform, bei welcher die Führungskonsole 30 integral am Gehäuse 2 ausgeformt ist.

Das Gehäuse 2 kann eine hier nicht gezeigte Montageöffnung aufweisen, durch die der Ladeluftkühler 4 in einer Einführrichtung 31 in das Gehäuse 2 eingeführt ist. Diese Einführrichtung 31 verläuft dabei parallel zur Querrichtung 7. Somit erstreckt sich auch die Führungsnut 12 parallel zur Einführrichtung 31. Auf diese Weise lässt sich der Ladeluftkühler 4 besonders einfach in das Gehäuse 2 einsetzen.

Obwohl in den Figuren 1 und 5 nur eine Seite des Ladeluftkühlers 4 gezeigt ist, an der eine derartige Bypassdichtung 6 ausgebildet ist, kann an einer davon abgewandten Seite des Ladeluftkühlers 4 eine weitere derartige Bypassdichtung 6 ausgebildet sein.

## Patentansprüche

1. Frischluftanlage zur Versorgung von Brennräumen einer aufgeladenen Brennkraftmaschine mit Frischluft,
- mit einem Gehäuse (2), durch das ein Frischluftpfad (3) hindurchgeführt ist,
- mit einem Ladeluftkühler (4), der im Gehäuse (2) so angeordnet ist, dass der Frischluftpfad (3) durch den Ladeluftkühler (4) hindurchführt,
- mit mindestens einer quer zum Frischluftpfad (3) verlaufenden Bypassdichtung (6), die zwischen dem Gehäuse (2) und dem Ladeluftkühler (4) angeordnet ist und die eine luftseitige Umgehung des Ladeluftkühlers (4) behindert,
- wobei die jeweilige Bypassdichtung (6) wenigstens einen Dichtkörper (9, 10) und einen Führungssteg (11) aufweist,
- wobei das Gehäuse (2) eine quer zum Frischluftpfad (3) verlaufende, zum Frischluftpfad (3) offene Führungsnut (12) aufweist,
**dadurch gekennzeichnet,**
- **dass** die jeweilige Bypassdichtung (6) einen Dichtungsträger (8) aufweist, der wenigstens einen solchen Dichtkörper (9, 10) trägt und der einen solchen Führungssteg (11) aufweist,
- **dass** der Führungssteg (11) in einer Steckrichtung (13) in die Führungsnut (12) eingreift,
- **dass** der Führungssteg (11) in der Steckrichtung (13) verstellbar in der Führungsnut (12) angeordnet ist.

2. Frischluftanlage nach Anspruch 1,
**dadurch gekennzeichnet,**
**dass** der Dichtungsträger (8) mittels Federkraft (14) in der Steckrichtung (13) gegen den Ladeluftkühler (4) vorgespannt ist.

3. Frischluftanlage nach Anspruch 1 oder 2,
**dadurch gekennzeichnet,**
**dass** Federmittel (15) zum Vorspannen des Dichtungsträgers (8) in der Steckrichtung (13) gegen den Ladeluftkühler (4) integral am Dichtungsträger (8) ausgeformt sind.

4. Frischluftanlage nach einem der Ansprüche 1 bis 3,
**dadurch gekennzeichnet,**
- **dass** der Dichtungsträger (8) zwei Tragstege (16) aufweist, die an einem von der Führungsnut (12) abgewandten Ende des Führungsstegs (11) so angeordnet sind, dass sie in entgegengesetzten Richtungen quer vom Führungssteg (11) abstehen,
- **dass** jeder Tragsteg (16) wenigstens einen Dichtkörper (10) aufweist, der am Ladeluftkühler (4) anliegt.

5. Frischluftanlage nach Anspruch 4,
**dadurch gekennzeichnet,**
**dass** an den Tragstegen (16) jeweils wenigstens eine Federlasche (15) angeordnet oder integral daran ausgeformt ist, die sich in der Steckrichtung (13) jeweils an einem die Führungsnut (12) seitlich begrenzenden Nutrand (17) abstützen.

6. Frischluftanlage nach Anspruch 5,
**dadurch gekennzeichnet,**
**dass** die jeweilige Federlasche (15) vom jeweiligen Tragsteg (16) ausgestellt ist.

7. Frischluftanlage nach einem der Ansprüche 4 bis 6,
**dadurch gekennzeichnet,**
**dass** jeder Tragsteg (16) an seinem vom Führungssteg (11) entfernten Ende einen in Richtung Ladeluftkühler (4) abgewinkelten Bord (18) aufweist, auf den der jeweilige Dichtkörper (9) aufgesteckt ist.

8. Frischluftanlage nach einem der Ansprüche 4 bis 6,
**dadurch gekennzeichnet,**
**dass** jeder Tragsteg (16) wenigstens einen Durchbruch aufweist, der von dem jeweiligen angespritzten Dichtkörper (9) durchsetzt ist.

9. Frischluftanlage nach einem der Ansprüche 1 bis 8,
**dadurch gekennzeichnet,**
**dass** der Führungssteg (11) innerhalb der Führungsnut (12) auf voneinander abgewandten Seiten je einen Dichtkörper (10) aufweist, wobei die beiden Dichtkörper (10) an sich gegenüberliegenden Nutwänden (19) anliegen.

10. Frischluftanlage nach einem der Ansprüche 1 bis 9,
**dadurch gekennzeichnet,**
**dass** die Führungsnut (12) einen dem Ladeluftkühler (4) zugewandten Dichtungsabschnitt (20), in dem am Führungssteg (11) angeordnete Dichtkörper (10) mit einander zugewandten Nutwänden (19) zusammenwirken, und einen über eine Querschnittsverengung (22) daran angrenzenden, vom Ladeluftkühler (4) abgewandten Führungsabschnitt (21) aufweist, in den ein vom Ladeluftkühler (4) abgewandter Endabschnitt (23) des Führungsstegs (11) in der Steckrichtung (13) eingreift.

11. Frischluftanlage nach Anspruch 9 oder 10,
**dadurch gekennzeichnet,**
**dass** der Führungssteg (11) wenigstens einen Durchbruch aufweist, der von dem jeweiligen angespritzten Dichtkörper (10) durchsetzt ist.

12. Frischluftanlage nach einem der Ansprüche 1 bis 11,
**dadurch gekennzeichnet,**
**dass** der Dichtungsträger (8) ein aus einem einzigen Blechteil (24) hergestellter Blechformkörper ist.

13. Frischluftanlage nach einem der Ansprüche 1 bis 12,
**dadurch gekennzeichnet,**
**dass** das Gehäuse (2) eine Führungskonsole (30) aufweist, in der die Führungsnut (12) ausgebildet ist.

14. Frischluftanlage nach einem der Ansprüche 1 bis 13,
**dadurch gekennzeichnet,**
**dass** das Gehäuse (2) eine Montageöffnung aufweist, durch die der Ladeluftkühler (4) in einer quer zum Frischluftpfad (3) verlaufenden Einführrichtung (31) in das Gehäuse (2) eingeführt ist, wobei sich die Führungsnut (12) in der Einführrichtung (31) erstreckt.

15. Frischluftanlage nach einem der Ansprüche 1 bis 14,
**dadurch gekennzeichnet,**
**dass** der Ladeluftkühler (4) an zwei voneinander abgewandten Seiten jeweils wenigstens eine derartige Bypassdichtung (6) aufweist.

## Claims

1. Fresh-air system for supplying combustion chambers of a supercharged internal combustion engine with fresh air,
- with a housing (2) through which a fresh-air path (3) is led,
- with an intercooler (4), which is arranged in the housing (2) such that the fresh-air path (3) leads through the intercooler (4),
- with at least one bypass seal (6) extending transversely to the fresh-air path (3), the bypass seal being arranged between the housing (2) and the intercooler (4) and impeding bypassing of the intercooler (4) on the air side,
- wherein each bypass seal (6) comprises at least one sealing body (9, 10) and a guide web (11),
- wherein the housing (2) comprises a guide groove (12) which extends transversely to the fresh-air path (3) and is open to the fresh-air path (3),
**characterized in that**
- each bypass seal (6) comprises a seal support (8) bearing at least one such sealing body (9, 10) and comprising one such guide web (11),
- the guide web (11) engages with the guide groove (12) in an insertion direction (13),
- in the insertion direction (13), the guide web (11) is arranged adjustably in the guide groove (12).

2. Fresh-air system according to claim 1,
**characterized in that**
the seal support (8) is preloaded with respect to the intercooler (4) by means of spring force (14) in the insertion direction (13).

3. Fresh-air system according to claim 1 or 2,
**characterized in that**
spring means (15) are integrally formed at the seal support (8) for preloading the seal support (8) with respect to the intercooler (4) in the insertion direction (13).

4. Fresh-air system according to any of claims 1 to 3,
**characterized in that**
- the seal support (8) comprises two support bars (16) which are arranged at an end of the guide web (11) distal to the guide groove (12) such that they project transversely to the guide web (11) in opposite directions,
- each support bar (16) comprises at least one sealing body (10) abutting the intercooler (4).

5. Fresh-air system according to claim 4,
**characterized in that**
at least one spring shackle (15) is arranged on the support bars (16) or is integrally formed therewith, the spring shackles being supported in the insertion direction (13) by a groove edge (17) laterally bounding the guide groove (12).

6. Fresh-air system according to claim 5,
**characterized in that**
each spring shackle (15) projects from the respective support bar (16).

7. Fresh-air system according to any of claims 4 to 6,
**characterized in that**
each support bar (16) comprises at its end distal to the guide web (11) a board (18) angled in the direction of the intercooler (4), wherein the respective sealing body (9) is attached to the board.

8. Fresh-air system according to any of claims 4 to 6,
**characterized in that**
each support bar (16) comprises at least one opening through which the respective moulded sealing body (9) extends.

9. Fresh-air system according to any of claims 1 to 8,
**characterized in that**
the guide web (11) inside the guide groove (12) comprises a sealing body (10) on each of the opposite sides, wherein both sealing bodies (10) abut groove walls (19) arranged opposite each other.

10. Fresh-air system according to any of claims 1 to 9,
**characterized in that**
the guide groove (12) comprises a sealing section (20) facing towards the intercooler (4), wherein sealing bodies (10) arranged at the guide web (11) cooperate with groove walls (19) facing each other, and the guide groove comprises a guide section (21) facing away from the intercooler (4) and abutting the sealing section via a cross-sectional constriction (22), wherein an end section (23) of the guide web (11) facing away from the intercooler (4) engages in the guide section in the insertion direction (13).

11. Fresh-air system according to claim 9 or 10,
**characterized in that**
the guide web (11) comprises at least one opening through which the respective moulded sealing body (10) extends.

12. Fresh-air system according to any of claims 1 to 11,
**characterized in that**
the seal support (8) is a sheet metal component made from a single sheet of metal (24).

13. Fresh-air system according to any of claims 1 to 12,
**characterized in that**
the housing (2) comprises a guide console (30) in which the guide groove (12) is formed.

14. Fresh-air system according to any of claims 1 to 13,
**characterized in that**
the housing (2) comprises a mounting opening through which the intercooler (4) is inserted into the housing (2) in an insertion direction (31) running transversely to the fresh air path (3), wherein the guide groove (12) extends in the insertion direction (31).

15. Fresh-air system according to any of claims 1 to 14,
**characterized in that**
the intercooler (4) comprises at least one such bypass sealing (6) on two sides facing away from each other.

## Revendications

1. Conditionnement d'air frais pour l'alimentation de chambres de combustion d'un moteur à combustion interne suralimenté en air frais,
- avec un carter (2), qui est traversé par un chemin d'air frais (3),
- avec un refroidisseur d'air de suralimentation (4), qui est agencé dans le carter (2) de façon à ce que le chemin d'air frais (3) traverse le refroidisseur d'air de suralimentation (4),
- avec au moins un joint de dérivation (6) s'étendant transversalement au chemin d'air frais (3), qui est agencé entre le carter (2) et le refroidisseur d'air de suralimentation (4) et empêche un contournement côté air du refroidisseur d'air de suralimentation (4),
- dans lequel le joint de dérivation (6) respectif présente au moins un corps d'étanchéité (9, 10) et une moulure de guidage (11),
- dans lequel le carter (2) présente une rainure de guidage (12) ouverte vers le chemin d'air frais (3), s'étendant transversalement au chemin d'air frais (3),
**caractérisé en ce**
- **que** le joint de dérivation (6) respectif présente un porte-joint (8), qui porte au moins un tel corps d'étanchéité (9, 10) et qui présente une telle moulure de guidage (11),
- **que** la moulure de guidage (11) est en prise avec la rainure de guidage (12) dans une direction d'enfichage (13),
- **que** la moulure de guidage (11) est agencée dans la rainure de guidage (12) de manière déplaçable dans la direction d'enfichage (13).

2. Conditionnement d'air frais selon la revendication 1,
**caractérisé en ce**
**que** le porte-joint (8) est précontraint par force de ressort (14) dans la direction d'enfichage (13) contre le refroidisseur d'air de suralimentation (4).

3. Conditionnement d'air frais selon la revendication 1 ou 2,
**caractérisé en ce**
**que** des moyens ressort (15) sont moulés d'un seul tenant au niveau du porte-joint (8) pour la précontrainte du porte-joint (8) dans la direction d'enfichage (13) contre le refroidisseur d'air de suralimentation (4).

4. Conditionnement d'air frais selon l'une quelconque des revendications 1 à 3,
**caractérisé en ce**
- **que** le porte-joint (8) présente deux moulures porteuses (16), qui sont agencées à une extrémité de la moulure de guidage (11) opposée à la rainure de guidage (12) de façon à être en saillie transversalement de la moulure de guidage (11) dans des directions opposées.
- **que** chaque moulure porteuse (16) présente au moins un corps d'étanchéité (10), qui s'appuie contre le refroidisseur d'air de suralimentation (4).

5. Conditionnement d'air frais selon la revendication 4,
**caractérisé en ce**
**qu'**au niveau des moulures porteuses (16), respectivement au moins une patte ressort (15) est agencée ou moulée d'un seul tenant sur celles-ci, qui s'appuient dans la direction d'enfichage (13) respectivement contre un bord de rainure (17) délimitant latéralement la rainure de guidage (12).

6. Conditionnement d'air frais selon la revendication 5,
**caractérisé en ce**
**que** la patte ressort (15) respective est relevée de la moulure porteuse (16) respective.

7. Conditionnement d'air frais selon l'une quelconque des revendications 4 à 6,
**caractérisé en ce**
**que** chaque moulure porteuse (16) présente à son extrémité éloignée de la moulure de guidage (11) un bord (18) coudé en direction du refroidisseur d'air de suralimentation (4), sur lequel est monté le corps d'étanchéité (9) respectif.

8. Conditionnement d'air frais selon l'une quelconque des revendications 4 à 6,
**caractérisé en ce**
**que** chaque moulure porteuse (16) présente au moins une traversée, qui est traversée par le corps d'étanchéité (9) respectif moulé par injection sous pression.

9. Conditionnement d'air frais selon l'une quelconque des revendications 1 à 8,
**caractérisé en ce**
**que** la moulure de guidage (11) présente à l'intérieur de la rainure de guidage (12) sur des côtés opposés l'un à l'autre respectivement un corps d'étanchéité (10), dans lequel les deux corps d'étanchéité (10) s'appuient contre des parois de rainure (19) opposées.

10. Conditionnement d'air frais selon l'une quelconque des revendications 1 à 9,
**caractérisé en ce**
**que** la rainure de guidage (12) présente une section d'étanchéité (20) orientée vers le refroidisseur d'air de suralimentation (4), dans laquelle des corps d'étanchéité (10) agencés au niveau de la moulure de guidage (11) coopèrent avec des parois de rainure (19) orientées l'une vers l'autre, et une section de guidage (21) opposée au refroidisseur d'air de suralimentation (4), adjacente à un rétrécissement de section transversale (22), avec laquelle une section d'extrémité (23) de la moulure de guidage (11) opposée au refroidisseur d'air de suralimentation (4) est en prise dans la direction d'enfichage (13).

11. Conditionnement d'air frais selon la revendication 9 ou 10,
**caractérisé en ce**
**que** la moulure de guidage (11) présente au moins une traversée, qui est traversée par le corps d'étanchéité (10) respectif moulé par injection sous pression.

12. Conditionnement d'air frais selon l'une quelconque des revendications 1 à 11,
**caractérisé en ce**
**que** le porte-joint (8) est un corps moulé en tôle réalisé à partir d'une seule pièce de tôle (24).

13. Conditionnement d'air frais selon l'une quelconque des revendications 1 à 12,
**caractérisé en ce**
**que** le carter (2) présente une console de guidage (30), dans laquelle la rainure de guidage (12) est réalisée.

14. Conditionnement d'air frais selon l'une quelconque des revendications 1 à 13,
**caractérisé en ce**
**que** le carter (2) présente une ouverture de montage, par laquelle le refroidisseur d'air de suralimentation (4) est introduit dans le carter (2) dans une direction d'introduction (31) s'étendant transversalement au chemin d'air frais (3), dans lequel la rainure de guidage (12) s'étend dans la direction d'introduction (31).

15. Conditionnement d'air frais selon l'une quelconque des revendications 1 à 14,
**caractérisé en ce**
**que** le refroidisseur d'air de suralimentation (4) présente au niveau de deux côtés opposés l'un à l'autre respectivement au moins un tel joint de dérivation (6).
